# EUROPEAN PATENT APPLICATION

(11) **EP 4 815 182 A1**
(43) Date of publication of application: **30.09.2026**
(21) Application number: 26168012.8
(22) Date of filing: 26.03.2026
(51) Int. Cl.: H01M 50/583, B60L 50/64, H01M 50/249, H01M 50/516

(54) **A BATTERY PACK**

(30) Priority: 27.03.2025 IN 202511028941
(71) Applicant: Hero Motocorp Limited, New Delhi, 110 070 (IN)
(72) Inventor: PORWAL, Manjul, 226016 Lucknow (IN); SAINI, Mohit, 248001 Dehradun (IN)
(74) Representative: Studio Torta S.p.A.

(57) **Abstract**

A battery pack (100) comprises at least one first battery cell (112a) and at least one second battery cell (112b), each comprising a first terminal (114) and a second terminal (116). The battery pack (100) further comprises at least one busbar unit (132) configured to connect the first battery cell (112a) and the second battery cell (112b). The at least one busbar unit (132) comprises a first connecting portion (134) welded to the first terminal (114) to form a first welded joint (140a), and a second connecting portion (136) welded to the second terminal (116) to form a second welded joint (140b). The first welded joint (140a) and the second welded joint (140b) are configured to electrically disconnect at a first overcurrent threshold value, and the first connecting portion (134) and the second connecting portion (136) are configured to electrically disconnect at a second overcurrent threshold value.

## Description

### TECHNICAL FIELD

The present disclosure relates to the field of automobiles. Particularly, the present disclosure relates to a battery pack configured to supply power to one or more components of a vehicle.

### BACKGROUND

The information in this section merely provides background information related to the present disclosure and may not constitute prior art(s) for the present disclosure.

Due to concerns about conventional fuel depletion and global warming, the automobile industry is facing the need to avoid using fossil fuels as raw materials, which is why the development of electric vehicles (EVs), hybrid electric vehicles (HEVs) and plug-in-hybrid vehicles (PHEV) is on the rise. These vehicles produce little or no emissions because they are powered by electricity stored in battery packs.

The battery pack comprises a collection of individual battery cells that are grouped together and connected to provide a higher voltage or capacity than a single battery cell. The collection of battery cells is stored in a battery casing that prevents physical damage and environmental factors from affecting the battery cells. Busbars are often used in the battery pack to connect the individual battery cells, either in series (for example, to increase voltage) or in parallel (for example, to increase capacity) or a combination thereof. The busbar is made of a conducting material and adapted to carry currents across the battery pack or between different parts of an electrical system. For example, the busbar connects different groups of battery cells or distributes power from the battery pack to an external load.

To ensure the safety and reliability of battery packs, cell-level fusing is provided, in which a fuse provided on the busbar, prevents overheating or excessive current flow. This is done by providing a portion of the fuse having narrower cross-section than the cross-section of the remaining portion of the fuse. Therefore, when the high current/temperature occurs near the narrower cross-section of the fuse, the fuse deforms, safeguarding the battery packs from overloads or short circuits. However, this conventional approach presents challenges. Heat generation at the fuse areas creates hot spots, reducing the battery's efficiency. Additionally, fuses impose limitations on busbar thickness, complicate configuration and manufacturing processes. Furthermore, the high fusing temperatures, can damage the insulation of the busbar PCB, affecting the overall safety and durability of the battery pack. Accordingly, there remains a need for an improved battery pack that addresses at least the problems identified above.

The present disclosure is directed to overcome one or more limitations stated above or any other limitations associated with the prior art.

### SUMMARY

One or more shortcomings of the prior art are overcome by the system/assembly/method as claimed, and additional advantages are provided through the provision of the system/assembly/method as claimed in the present disclosure. Additional features and advantages are realized through the techniques of the present disclosure. Other embodiments and aspects of the disclosure are described in detail herein and are considered a part of the claimed disclosure.

In one non-limiting embodiment of the present disclosure, a battery pack is disclosed. The battery pack comprises at least one first battery cell and at least one second battery cell. Each of the at least one first battery cell and the at least one second battery cell comprises a first terminal and a second terminal. At least one busbar unit is configured to electrically connect the at least one first battery cell and the at least one second battery cell. The at least one busbar unit comprises a first connecting portion configured to be welded to the first terminal of the at least one first battery cell to form a first welded joint therebetween, and a second connecting portion configured to be welded to the second terminal of the at least one second battery cell to form a second welded joint therebetween. The first welded joint and the second welded joint are configured to electrically disconnect the respective first terminal and the second terminal from the at least one busbar unit when a current exceeding a first overcurrent threshold value flows through the respective welded joint. The first connecting portion and the second connecting portion are configured to electrically disconnect the corresponding battery terminal from the at least one busbar unit when a current exceeding a second overcurrent threshold value flows through the respective connecting portion. The first overcurrent threshold value is lower than the second overcurrent threshold value.

In an embodiment of the present disclosure, welding of the first connecting portion and the second connecting portion to the at least one first battery cell and the at least one second battery cell, respectively, is performed such that one or more welding parameters are controlled to establish a predetermined electrical resistance at the first welded joint and the second welded joint. The predetermined electrical resistance is sufficient to cause the first welded joint and the second welded joint to electrically disconnect when a current exceeding the first overcurrent threshold value passes through the respective welded joint.

In an embodiment of the present disclosure, the one or more welding parameters are selected from a group consisting of a weld arc length, a weld arc width, a weld penetration depth, a welding power input, and a welding duration.

In an embodiment of the present disclosure, the first overcurrent threshold value of the first welded joint and the second welded joint is in a range of 300 amperes to 350 amperes.

In an embodiment of the present disclosure, the one or more welding parameters are controlled by setting a weld arc length in a range of 3 mm to 8 mm, setting a weld arc width in a range of 0.1 mm to 0.5 mm, achieving a weld penetration depth in a range of 0.3 mm to 0.7 mm, setting a welding power input in a range of 100 W to 500 W, and setting a welding duration in a range of 50 ms to 70 ms.

In an embodiment of the present disclosure, the at least one busbar unit is configured to elastically deform and exhibit a spring-back effect upon electrical disconnection of the first welded joint or the second welded joint, thereby separating the first connecting portion or the second connecting portion from the corresponding first terminal or second terminal.

In an embodiment of the present disclosure, the at least one busbar unit comprises a bent portion disposed between a base portion of the at least one busbar unit and at least one of the first connecting portion and the second connecting portion, the bent portion being elastically deformable such that, upon electrical disconnection of the first welded joint or the second welded joint, the at least one busbar unit moves away from the corresponding first terminal or second terminal of the at least one first battery cell or the at least one second battery cell due to the spring-back effect.

In an embodiment of the present disclosure, the spring-back effect is enabled by elastic properties of a material of the at least one busbar unit, thereby preventing re-establishment of electrical contact after separation.

In an embodiment of the present disclosure, the at least one busbar unit is made of a material selected from a group consisting of nickel-coated cold-rolled steel, copper, or a combination thereof.

In an embodiment of the present disclosure, the first connecting portion comprises a planar profile, and the second connecting portion comprises an arcuate profile.

It is to be understood that the aspects and embodiments of the disclosure described above may be used in any combination with each other. Several of the aspects and embodiments may be combined together to form a further embodiment of the disclosure.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF FIGURES

The novel features and characteristics of the disclosure are set forth in the description. The disclosure itself, however, as well as a preferred mode of use, further objectives, and advantages thereof, will best be understood by reference to the following description of an illustrative embodiment when read in conjunction with the accompanying drawings. One or more embodiments are now described, by way of example only, with reference to the accompanying drawings wherein like reference numerals represent like elements and in which:
FIG. 1 illustrates a schematic view of a two-wheeled vehicle comprising a battery pack, in accordance with an embodiment of the present disclosure;
FIG. 2 illustrates a perspective view of the battery pack, in accordance with an embodiment of the present disclosure;
FIG. 3 illustrates an exploded view of the battery pack of FIG. 2, in accordance with an embodiment of the present disclosure;
FIG. 4 illustrates a magnified view of a plurality of battery cells connected by at least one busbar unit, in accordance with an embodiment of the present disclosure;
FIG. 5 illustrates a top view of the battery pack, in accordance with an embodiment of the present disclosure;
FIG. 6 illustrates a schematic view of a busbar unit, in accordance with an embodiment of the present disclosure;
FIG. 7 illustrates a schematic view of a spring-back effect of the busbar unit connecting the plurality of battery cells, in accordance with an embodiment of the present disclosure; and
FIG. 8 illustrates a flowchart of a method of manufacturing the battery pack, in accordance with an embodiment of the present disclosure.

Skilled artisans will appreciate that elements in the drawings are illustrated for simplicity and have not necessarily been drawn to scale. For example, the dimensions of some of the elements in the drawings may be exaggerated relative to other elements to help to improve understanding of embodiments of the present disclosure.

### DETAILED DESCRIPTION

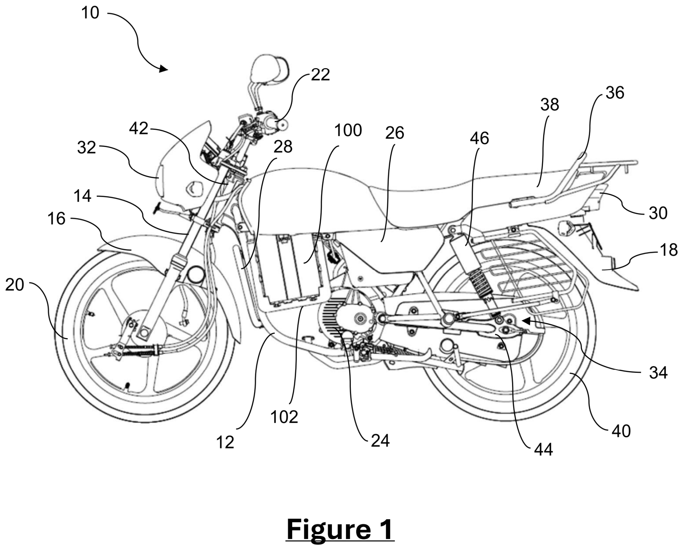

While the disclosure is susceptible to various modifications and alternative forms, specific embodiments thereof have been shown by way of example in the FIGS. 1 to 8 and will be described in detail below. It should be understood, however that it is not intended to limit the disclosure to the particular forms disclosed, but on the contrary, the disclosure is to cover all modifications, equivalents, and alternatives falling within the scope of the disclosure as defined by the appended claims.

Before describing detailed embodiments, it may be observed that the novelty and inventive step that are in accordance with the present disclosure resides in a battery pack and a method of manufacturing the battery pack for supplying electrical power to one or more components of a vehicle. It is to be noted that a person skilled in the art can be motivated from the present disclosure and modify the various constructions of the battery pack. However, such modification should be construed within the scope of the present disclosure. Accordingly, the drawings are showing only those specific details that are pertinent to understanding the embodiments of the present disclosure so as not to obscure the disclosure with details that will be readily apparent to those of ordinary skill in the art having benefit of the description herein.

In the present disclosure, the term "exemplary" is used herein to mean "serving as an example, instance, or illustration." Any embodiment or implementation of the present subject matter described herein as "exemplary" is not necessarily to be construed as preferred or advantageous over other embodiments.

The terms "comprises", "comprising", or any other variations thereof, are intended to cover a non-exclusive inclusions, such that a device that comprises a list of components does not include only those components but may include other components not expressly listed or inherent to such setup or device. In other words, one or more elements in a system or apparatus proceeded by "comprises... a" does not, without more constraints, preclude the existence of other elements or additional elements in the system or apparatus.

The terms like "at least one" and "one or more" may be used interchangeably or in combination throughout the description.

While the present disclosure is illustrated in the context of a two-wheeled vehicle, however, battery pack and aspects and features thereof can be used with other type of vehicles such as three-wheeled vehicle, four-wheeled vehicle, as well. The terms "modular vehicle", "vehicle", "electric vehicle", "hybrid electric vehicle", "EV", "HEV", and "motorcycle" have been interchangeably used throughout the description. The term "two-wheeled vehicle" comprises vehicles such as motorcycles, scooters, bicycles, mopeds, scooter type vehicle, and the like.

The terms "front/forward", "rear/rearward/back/backward", "up/upper/top", "down/lower/lower ward/downward, bottom", "left/leftward", "right/rightward" used therein represents the directions as seen from a vehicle driver sitting astride.

Pursuant to an aspect, a battery pack is disclosed for supplying power to one or more components of a vehicle. The battery pack comprises at least one first battery cell and at least one second battery cell, each comprising a first terminal and a second terminal. The battery pack further comprises at least one busbar unit configured to electrically connect the battery cells. The at least one busbar unit comprises a first connecting portion and a second connecting portion welded to the respective terminals to form welded joints. The welded joints are configured to electrically disconnect at a first overcurrent threshold value, and the connecting portions are configured to electrically disconnect at a second overcurrent threshold value, the first overcurrent threshold value being lower than the second overcurrent threshold value. The at least one busbar unit is further configured to exhibit a spring-back effect upon disconnection to prevent re-establishment of electrical contact.

Reference will now be made to the exemplary embodiments of the disclosure, as illustrated in the accompanying drawings. Wherever possible, same numerals will be used to refer to the same or like parts. Embodiments of the disclosure are described in the following paragraphs with reference to FIGS. 1 to 8. In FIGS. 1 to 8, the same element or elements which have same functions are indicated by the same reference signs.

Referring to FIG. 1, the present disclosure relates to a vehicle (10), for example, a two-wheeled vehicle (10), such as a scooter or a motorcycle, according to an embodiment of the present disclosure. The present disclosure may also be applicable As shown in FIG. 1, the vehicle (10) comprises a vehicle frame (12), a pair of front forks (14), a front fender (16), a rear fender (18), a front wheel (20), a steering handlebar (22), one or more battery pack (100) or a battery, a driving unit (24), for example, a motor, a side body cover (26), a leg shield (28), a tail light (30), a headlight (32), a rear suspension (34), a rear grip (36), and a rear wheel (40) adapted to be driven by the driving unit (24).

Still referring to FIG. 1, the vehicle frame (12) comprises a pair of seat sub-frames (not visible) for mounting the seat (38). Further, the vehicle comprises a head tube (42) that is adapted to be steerably connected to the front forks (14), and the front wheel (20) may be attached to a lower end of the front forks (14). The steering handlebar (22) may be attached to an upper end of the head tube (42). The headlight (32) may be arranged in front of the steering handlebar (22). The front fender (16) may be provided so as to cover an upper portion of the front wheel (20). The leg shield (28) that protects legs of the rider may be provided on the front side. The tail light (30) and the rear fender (18) may be provided at a rear portion of the vehicle frame (12). The driving unit (24) may be arranged under the seat (38) of the vehicle (10).

In accordance with the present disclosure, as shown in FIG. 1, the rear suspension (34) may comprise a swing arm (44) and a suspension system (46). The swing arm (44) may be configured to pivotally couple the rear wheel (40) of the vehicle (10) to the vehicle frame (12) of the vehicle (10) such that during movement/ travel of the vehicle (10) over an uneven terrain, the rear wheel (40) of the vehicle (10) may pivot with respect to the vehicle frame (12) for damping the shock and/or vibrations and thus offer smooth riding experience to the rider and/ or passenger. Further, as shown in FIG. 1, the suspension system (46) may be embodied as a shock absorber, a first end of which is coupled to the vehicle frame (12) and a second end is coupled to an axle of the rear wheel (40) of the vehicle (10).

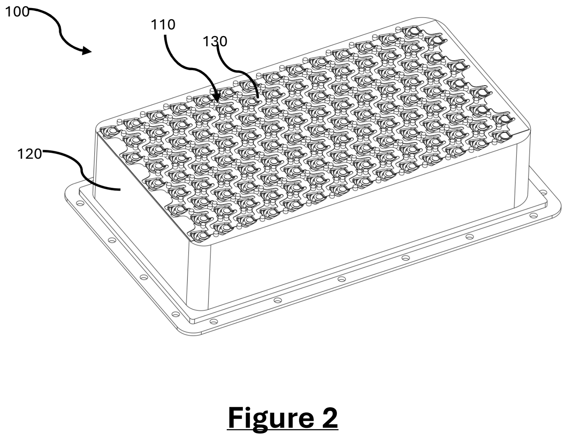

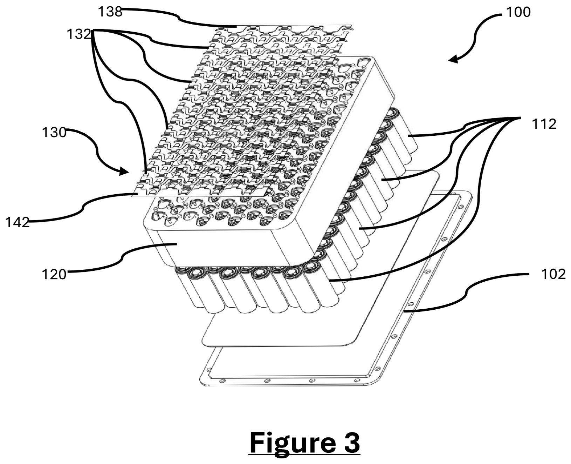

Referring to FIGS. 2 and 3, the battery pack (100) of the vehicle (10) may be adapted to supply power or electric energy to one or more components, for example the headlight (32), the tail light (30), an instrument cluster, or to an electric motor, etc., of the vehicle (10). Further, the vehicle (10) may comprise a cover (102) adapted to house the battery pack (100) of the vehicle (10). In an embodiment, the battery pack (100) may be provided in the front portion of the vehicle (10). Specifically, the battery pack (100) may be provided ahead of the seat (38) of the vehicle (10). For example, the vehicle (10) may define a cavity within the vehicle frame (12) and/ or between the devices/ components/ units of the vehicle (10), and the battery pack (100) may be provided in the said cavity. Further, the cavity of the vehicle (10) may be open to the outside of the vehicle (10) via an opening defined in the vehicle frame (12). In other embodiments, the battery pack (100) may be provided under the seat (38) of the vehicle (10), for example, in a storage compartment defined under the seat (38) of the vehicle (10). In yet other embodiments, the battery pack (100) may be provided in the rear portion of the vehicle (10).

Referring to FIG. 3, in accordance with the present disclosure, a battery pack (100) is disclosed. The battery pack (100) may comprise a plurality of battery cells (112) arranged to supply electrical energy to one or more electrical systems. In an embodiment, the plurality of battery cells (112) may be stacked together in a predefined configuration to form a battery cell stack (110). For example, as illustrated in FIG. 3, the plurality of battery cells (112) may be positioned adjacent to each other such that the battery cells collectively define the battery cell stack (110). The battery pack (100) may be configured to supply electrical power to one or more components of a vehicle (10), for example to an electrical circuit associated with propulsion, auxiliary electronics, or energy storage subsystems of the vehicle (10).

In an embodiment, the plurality of battery cells (112) of the battery pack (100) may include electrochemical cells having terminals through which electrical energy is delivered. Each of the individual battery cells of the plurality of battery cells (112) may be electrically connected in either a series configuration, a parallel configuration, or a combination thereof depending on the desired voltage and current characteristics of the battery pack (100).

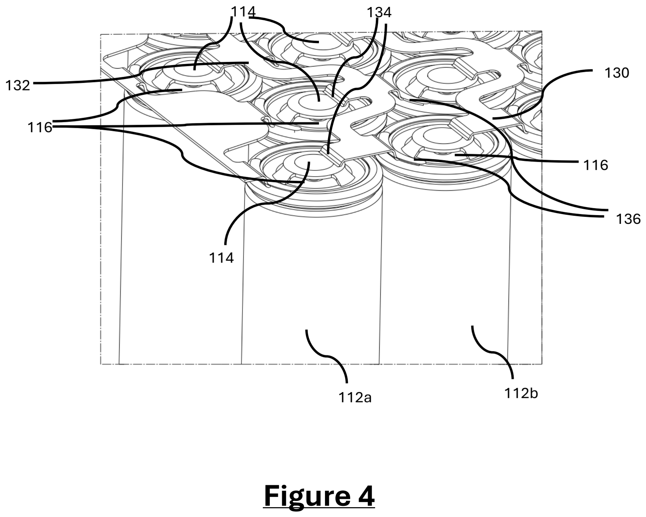

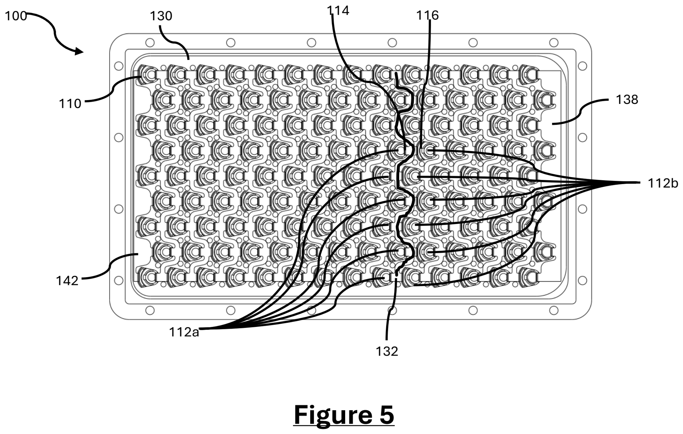

In an embodiment, each battery cell of the plurality of battery cells (112) comprises a first terminal (114) and a second terminal (116). In an embodiment, the plurality of battery cells (112) comprises at least one first battery cell (112a) and at least one second battery cell (112b) (as shown in FIG. 4 and FIG. 5). The at least one first battery cell (112a) and the at least one second battery cell (112b) each comprise the first terminal (114) and the second terminal (116). The at least one first battery cell (112a) and the at least one second battery cell (112b) may be arranged adjacent to each other within the battery pack (100) and may be electrically connected through a busbar assembly (130).

In an embodiment, the plurality of battery cells (112) may be arranged in a zig-zag configuration or any other suitable spatial arrangement that optimizes packaging efficiency, electrical connectivity, and thermal management. The plurality of battery cells (112) may be cylindrical cells, prismatic cells, pouch-type electrochemical cells, or any other suitable type of rechargeable electrochemical cell. The plurality of battery cells (112) are arranged in a predetermined configuration so as to collectively deliver a required voltage output and current capacity suitable for the intended application of the battery pack (100).

Further, as shown in FIG. 3, the battery pack (100) may comprise a cell holder (120) that is configured to retain and position the plurality of battery cells (112) within the battery pack (100). The cell holder (120) may define a plurality of compartments (122), each compartment being configured to receive and support a corresponding battery cell (112). This arrangement helps maintain proper alignment of the battery cells (112) and their terminals, thereby facilitating reliable electrical interconnection within the battery pack (100).

Referring now to FIGS. 3, 4 and 5, the battery pack (100) further comprises a busbar assembly (130) configured to electrically connect the plurality of battery cells (112) with one another. The busbar assembly (130) enables electrical current to flow between the plurality of battery cells (112) and thereby establishes the desired series or parallel electrical configuration of the battery pack (100). The busbar assembly (130) may comprise at least one busbar unit (132). The at least one busbar unit (132) highlighted in bold in figure 5 for better visibility. Specifically, the busbar unit (132) is configured to electrically connect the at least one first battery cell (112a) and the at least one second battery cell (112b).

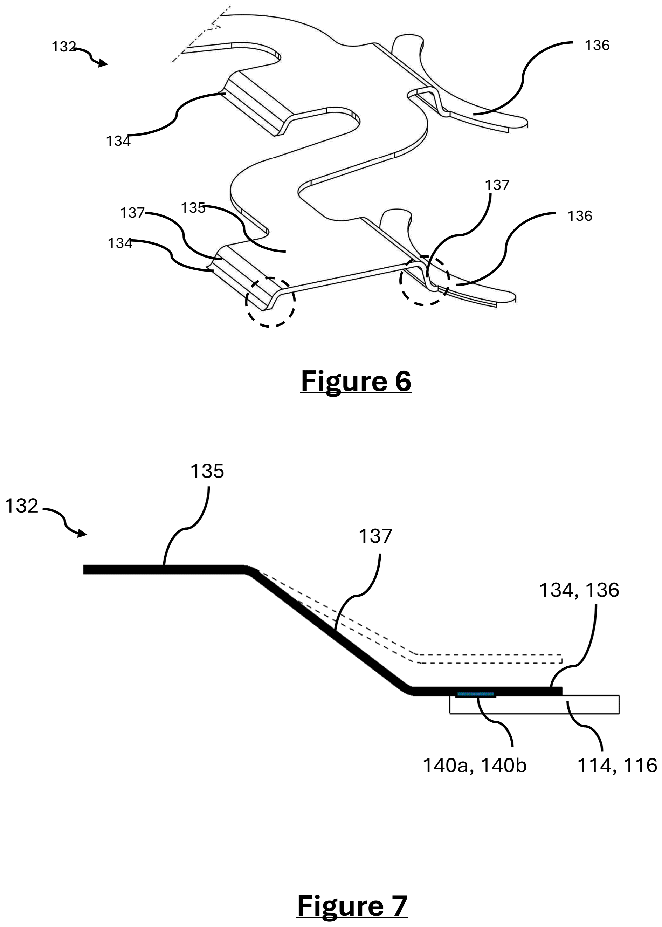

In an embodiment, the at least one busbar unit (132) comprises a first connecting portion (134), a base portion (135), and a second connecting portion (136) as illustrated in Fig. 6. The base portion (135) may provide structural support and mechanical stability to the at least one busbar unit (132). The base portion (135) may further act as a conductive pathway through which electrical current flows between the first connecting portion (134) and the second connecting portion (136).

The first connecting portion (134) is configured to be electrically connected to the first terminal (114) of one or more battery cells (112), and the second connecting portion (136) is configured to be electrically connected to the second terminal (116) of one or more battery cells (112). In an embodiment, the first connecting portion (134) comprises a planar profile, while the second connecting portion (136) comprises an arcuate profile. The planar configuration of the first connecting portion (134) may facilitate stable welding and reliable electrical contact with the first terminal (114), whereas the arcuate configuration of the second connecting portion (136) may increase the contact area with the second terminal (116), thereby promoting improved current distribution and reducing localized current concentration.

Referring to Fig. 5, the battery pack (100) may further comprise a first end plate (138) and a second end plate (142) disposed at edges of the busbar assembly (130). In an embodiment, the first end plate (138) may function as a global first terminal of the battery pack (100), while the second end plate (142) may function as a global second terminal of the battery pack (100).

In accordance with the present disclosure, the at least one busbar unit (132) may be formed from an electrically conductive material selected from a group consisting of nickel-coated cold-rolled steel, copper, or a combination thereof. These materials provide suitable electrical conductivity for efficient current transfer between battery cells (112). Additionally, such materials possess sufficient elasticity to enable deformation of the at least one busbar unit (132) when subjected to mechanical stress, which contributes to the spring-back behaviour described later. Consequently, the selected materials provide both electrical performance and mechanical resilience within the battery pack (100).

The first connecting portion (134) and the second connecting portion (136) of the at least one busbar unit (132) are connected to terminals of the at least one first battery cell (112a) and the at least one second battery cell (112b) using a welding process. In an embodiment, the first connecting portion (134) configured to be welded to the first terminal (114) of the at least one first battery cell (112a) to form a first welded joint (140a) therebetween, and the second connecting portion (136) configured to be welded to the second terminal (116) of the at least one second battery cell (112b) to form a second welded joint (140b) therebetween

In an embodiment of the present disclosure, the at least one busbar unit (132) may comprise a plurality of busbar units (132) arranged adjacent to one another. Each of the plurality of busbar units (132) may include a plurality of connection points corresponding to the first terminals (114) and the second terminals (116) of the plurality of battery cells (112). Each of the first connecting portions (134) of the respective busbar units (132) may be electrically connected to the first terminals (114) of the plurality of first battery cells (112a), and each of the second connecting portions (136) may be electrically connected to the second terminals (116) of the plurality of second battery cells (112b). The remaining terminals of the plurality of first battery cells (112a) and the plurality of second battery cells (112b) may be electrically connected to adjacent busbar units (132), thereby establishing interconnections between neighboring units. The plurality of battery cells (112) positioned at terminal ends of the arrangement may be electrically connected to the first end plate (138) and the second end plate (142), which function as global terminals of the battery pack (100). In this manner, the plurality of battery cells (112) may be configured in a combined series and parallel configuration to achieve desired electrical characteristics.

In accordance with the present disclosure, the welding process is controlled such that the first welded joint (140a) and the second welded joint (140b) possess a predetermined electrical resistance. The predetermined electrical resistance enables the welded joints to function as integrated protective elements within the battery pack (100). In particular, the welded joints may serve as integrated fuse-like structures that disconnect the electrical connection when excessive current flows through the battery pack (100). This configuration eliminates the need for separate fuse components and simplifies the overall architecture of the battery pack (100).

In accordance with the present disclosure, when a current exceeding a first overcurrent threshold value flows through the first welded joint (140a), the first terminal (114) of the at least one first battery cell (112a) is electrically disconnected from the at least one busbar unit (132). Similarly, when the current exceeding the first overcurrent threshold value flows through the second welded joint (140b), the second terminal (116) of the at least one second battery cell (112b) is electrically disconnected from the at least one busbar unit (132). This controlled failure mechanism ensures predictable electrical disconnection during abnormal current conditions and helps protect the battery cells (112) from damage.

Furthermore, the first connecting portion (134) and the second connecting portion (136) are configured to electrically disconnect when a current exceeding a second overcurrent threshold value flows through the respective connecting portion. Since the first overcurrent threshold value is lower than the second overcurrent threshold value, the welded joints fail before the connecting portions break. This sequential failure behaviour provides a multi-stage protection mechanism that enhances safety and reliability of the battery pack (100).

In an embodiment, the first welded joint (140a) and the second welded joint (140b) are configured such that the first overcurrent threshold value associated with the welded joints lies within a range of 300 amperes to 350 amperes.

In an embodiment, welding of the first connecting portion (134) to the first terminal (114) and welding of the second connecting portion (136) to the second terminal (116) may be performed such that one or more welding parameters are controlled. Control of the welding parameters allows the predetermined electrical resistance to be established at the first welded joint (140a) and the second welded joint (140b). Precise control of these parameters ensures consistent weld characteristics and predictable electrical behaviour of the welded joints.

The one or more welding parameters are selected from a group consisting of a weld arc length, a weld arc width, a weld penetration depth, a welding power input, and a welding duration. In an embodiment, the weld arc length is in a range of 3 millimeters to 8 millimeters, the weld arc width is in a range of 0.1 millimeters to 0.5 millimeters, and the weld penetration depth is in a range of 0.3 millimeters to 0.7 millimeters. By regulating these parameters, the geometry and electrical resistance of the welded joints can be precisely controlled, thereby enabling reliable and repeatable performance of the protective disconnection mechanism. In an embodiment, the welding power input is in a range of 100 watts to 500 watts and the welding duration is in a range of 50 milliseconds to 70 milliseconds. The selected welding parameters allow the welded joints to withstand normal operating currents while ensuring that the welded joints break in a controlled manner when exposed to excessive current levels.

It is to be noted that the aforementioned ranges of the welding parameters are specifically configured to achieve the first overcurrent threshold value in a range of 300 amperes to 350 amperes. It is to be understood that, in order to obtain an overcurrent threshold value lower than or higher than the range of 300 amperes to 350 amperes, one or more of the welding parameters, including the weld arc length, the weld arc width, the weld penetration depth, the welding power input, and the welding duration, may be correspondingly adjusted. Accordingly, variation in the desired overcurrent threshold value may be achieved by modifying the welding parameter ranges to alter the electrical resistance and structural characteristics of the welded joints.

When electrical current exceeding the first overcurrent threshold value flows through the welded joints, thermal and mechanical stresses cause the welded joints to break.

Referring to FIG. 7, the at least one busbar unit (132) may be configured to elastically deform and exhibit a spring-back effect. The spring-back effect occurs when the first welded joint (140a) or the second welded joint (140b) breaks. When the welded joint breaks, elastic energy stored in the at least one busbar unit (132) is released, causing the at least one busbar unit (132) to move away from the corresponding battery terminal. Consequently, the first connecting portion (134) or the second connecting portion (136) separates from the corresponding terminal. This physical separation prevents re-establishment of electrical contact and thereby improves electrical isolation following a fault event.

In an embodiment, the at least one busbar unit (132) comprises a bent portion (137) disposed between the base portion (135) and at least one of the first connecting portion (134) and the second connecting portion (136). The bent portion (137) is elastically deformable and enhances the spring-back effect by storing elastic energy within the structure of the at least one busbar unit (132).

Upon failure of the first welded joint (140a) or the second welded joint (140b), elastic recovery of the bent portion (137) causes the at least one busbar unit (132) to move away from the battery terminals. This movement increases the physical separation between conductive components and thereby reduces the risk of unintended electrical reconnection or arcing. The spring-back effect is enabled by the elastic properties of the conductive material forming the at least one busbar unit (132). These elastic properties prevent re-establishment of electrical contact after separation and therefore improve operational safety of the battery pack (100).

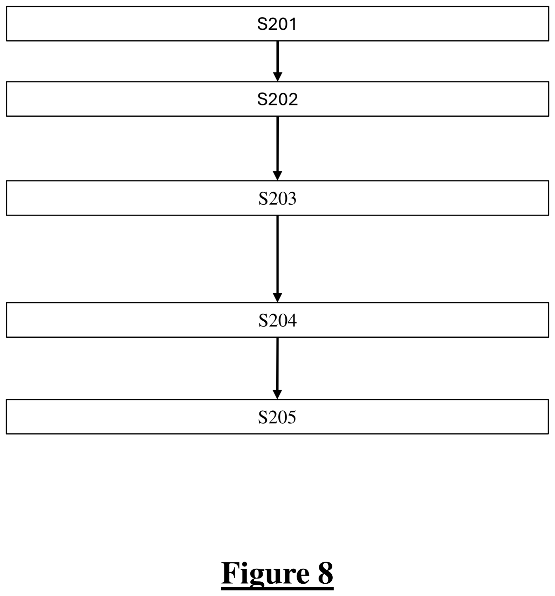

A method of manufacturing the battery pack (100) is now disclosed with reference to FIG. 8. At step S201 (Stacking a plurality of battery cells in a predefined configuration), the plurality of battery cells (112) is stacked in a predefined configuration. At step S202 (Positioning at least one busbar unit having a first interconnector and a second interconnector relative to the plurality of battery cells), the busbar assembly (130) comprising at least one busbar unit (132) is positioned relative to the plurality of battery cells (112). At step S203 (Aligning the first connecting portion with a first terminal of the plurality of battery cells and the second connecting portion with a second terminal of the plurality of battery cells), the first connecting portion (134) is aligned with the first terminals (114), and the second connecting portion (136) is aligned with the second terminals (116). At step S204 (Selecting welding parameters to obtain a predetermined electrical resistance at welded interconnections), welding parameters are selected to obtain predetermined electrical resistance at welded connections. At step S205 (Welding the first interconnector and the second interconnector to the corresponding first terminal and the second terminal to form welded joint), the first connecting portion (134) is welded to the first terminals (114) to form the first welded joint (140a), and the second connecting portion (136) is welded to the second terminals (116) to form the second welded joint (140b).

Under normal operating conditions, the temperature rise per welded joint is maintained at less than 5°C above ambient when subjected to a continuous current of 10 amperes for 30 minutes. When subjected to at least 350 amperes for 0.3 seconds, the welded joint heats up beyond 1100°C causing controlled separation and disconnecting the at least one busbar unit (132) from the terminals of the plurality of battery cells (112).

The battery pack (100) as disclosed offers several advantages over conventional battery packs that rely on conventional fuses. These advantages include elimination of conventional fuses, as the welded joints serve as integrated fuses, simplifying configuration and reducing the number of components required. The welded joints further provide a controlled and predictable failure mechanism under overcurrent conditions, thereby improving operational safety and protecting the battery cells (112) from damage. The controlled failure mechanism enhances safety while the spring-back effect ensures complete disconnection. In particular, the spring-back effect of the at least one busbar unit (132) enables physical separation of the first connecting portion (134) or the second connecting portion (136) from the corresponding terminals (114, 116), thereby preventing re-establishment of electrical contact and reducing the risk of arcing. Further, the presence of the bent portion (137) enhances elastic deformation and facilitates rapid and reliable mechanical separation after failure, thereby increasing electrical isolation between conductive components.

Additionally, by precisely controlling the welding parameters, the battery pack achieves consistent performance and predictable behaviour under fault conditions. The controlled welding parameters also enable tailoring of the overcurrent threshold value by adjusting weld characteristics. The modular nature of the busbar assembly (130) allows easy replacement without requiring overhaul of the entire battery pack (100), thereby improving serviceability and reducing maintenance time and cost.

The various embodiments of the present disclosure have been described above with reference to the accompanying drawings. The present disclosure is not limited to the illustrated embodiments; rather, these embodiments are intended to fully and completely disclose the subject matter of the disclosure to those skilled in this art. In the drawings, like numbers refer to like elements throughout. Thicknesses and dimensions of some components may be exaggerated for clarity.

It is to be understood that the battery pack described herein with reference to a vehicle is merely an exemplary application and should not be construed as limiting the scope of the present disclosure. The battery pack may be implemented in a variety of other applications requiring electrical energy storage and supply. For instance, the battery pack may be used in household energy storage systems, inverter systems, uninterruptible power supply (UPS) systems, renewable energy storage such as solar power systems, portable power units, or other industrial and consumer electronic applications. The structural and functional features of the battery pack enable its adaptability across such applications while maintaining safety and reliability.

Herein, the terms "attached", "connected", "interconnected", "contacting", "mounted", "coupled" and the like can mean either direct or indirect attachment or contact between elements, unless stated otherwise.

Well-known functions or constructions may not be described in detail for brevity and/or clarity. As used herein the expression "and/or" includes any and all combinations of one or more of the associated listed items.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising", "includes" and/or "including" when used in this specification, specify the presence of stated features, operations, elements, and/or components, but do not preclude the presence or addition of one or more other features, operations, elements, components, and/or groups thereof.

While considerable emphasis has been placed herein on the particular features of this disclosure, it will be appreciated that various modifications can be made, and that many changes can be made in the preferred embodiments without departing from the principles of the disclosure. These and other modifications in the nature of the disclosure or the preferred embodiments will be apparent to those skilled in the art from the disclosure herein, whereby it is to be distinctly understood that the foregoing descriptive matter is to be interpreted merely as illustrative of the disclosure and not as a limitation.

### EQUIVALENTS:

The embodiments herein and the various features and advantageous details thereof are explained with reference to the non-limiting embodiments in the description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

Any discussion of documents, acts, materials, devices, articles and the like that has been included in this specification is solely for the purpose of providing a context for the disclosure. It is not to be taken as an admission that any or all of these matters form a part of the prior art base or were common general knowledge in the field relevant to the disclosure as it existed anywhere before the priority date of this application.

The numerical values mentioned for the various physical parameters, dimensions or quantities are only approximations and it is envisaged that the values higher/lower than the numerical values assigned to the parameters, dimensions or quantities fall within the scope of the disclosure, unless there is a statement in the specification specific to the contrary.

## Claims

1. A battery pack (100) comprising:
at least one first battery cell (112a) and at least one second battery cell (112b), each of the at least one first battery cell (112a) and the at least one second battery cell (112b) comprising a first terminal (114) and a second terminal (116);
at least one busbar unit (132) configured to electrically connect the at least one first battery cell (112a) and the at least one second battery cell (112b), the at least one busbar unit (132) comprising:
a first connecting portion (134) configured to be welded to the first terminal (114) of the at least one first battery cell (112a) to form a first welded joint (140a) therebetween; and
a second connecting portion (136) configured to be welded to the second terminal (116) of the at least one second battery cell (112b) to form a second welded joint (140b) therebetween;
wherein the first welded joint (140a) and the second welded joint (140b) are configured to electrically disconnect the respective first terminal (114) and the second terminal (116) from the at least one busbar unit (132) when a current exceeding a first overcurrent threshold value flows through the respective welded joint;
wherein the first connecting portion (134) and the second connecting portion (136) are configured to electrically disconnect the corresponding battery terminal (114, 116) from the at least one busbar unit (132) when a current exceeding a second overcurrent threshold value flows through the respective connecting portion (134, 136); and
wherein the first overcurrent threshold value is lower than the second overcurrent threshold value.

2. The battery pack (100) as claimed in claim 1, wherein the welding of the first connecting portion (134) and the second connecting portion (136) to the at least one first battery cell (112a) and the at least one second battery cell (112b), respectively, is performed such that one or more welding parameters are controlled to establish a predetermined electrical resistance at the first welded joint (140a) and the second welded joint (140b),
whereby the predetermined electrical resistance is sufficient to cause the first welded joint (140a) and the second welded joint (140b) to electrically disconnect when a current exceeding the first overcurrent threshold value passes through the respective welded joint.

3. The battery pack (100) as claimed in claim 2, wherein the one or more welding parameters are selected from a group consisting of: a weld arc length, a weld arc width, a weld penetration depth, a welding power input, and a welding duration.

4. The battery pack (100) as claimed in claim 1, wherein the first overcurrent threshold value of the first welded joint (140a) and the second welded joint (140b) is in a range of 300 amperes to 350 amperes.

5. The battery pack (100) as claimed in claim 3, wherein the one or more welding parameters are controlled by:
setting a weld arc length in a range of 3 mm to 8 mm;
setting a weld arc width in a range of 0.1 mm to 0.5 mm;
achieving a weld penetration depth in a range of 0.3 mm to 0.7 mm;
setting a welding power input in a range of 100 W to 500 W; and
setting a welding duration in a range of 50 ms to 70 ms.

6. The battery pack (100) as claimed in claim 1, wherein the at least one busbar unit (132) is configured to elastically deform and exhibit a spring-back effect upon electrical disconnection of the first welded joint (140a) or the second welded joint (140b), thereby separating the first connecting portion (134) or the second connecting portion (136) from the corresponding first terminal (114) or second terminal (116).

7. The battery pack (100) as claimed in claim 6, wherein the at least one busbar unit (132) comprises a bent portion (137) disposed between a base portion (135) of the at least one busbar unit (132) and at least one of the first connecting portion (134) and the second connecting portion (136),
the bent portion (137) being elastically deformable such that, upon electrical disconnection of the first welded joint (140a) or the second welded joint (140b), the at least one busbar unit (132) moves away from the corresponding first terminal (114) or second terminal (116) of the at least one first battery cell (112a) or the at least one second battery cell (112b) due to the spring-back effect.

8. The battery pack (100) as claimed in claim 7, wherein the spring-back effect is enabled by elastic properties of a material of the at least one busbar unit (132), thereby preventing re-establishment of electrical contact after separation.

9. The battery pack (100) as claimed in claim 8, wherein the at least one busbar unit (132) is made of a material selected from a group consisting of nickel-coated cold-rolled steel, copper, or a combination thereof.

10. The battery pack (100) as claimed in claim 1, wherein the first connecting portion (134) comprises a planar profile, and the second connecting portion (136) comprises an arcuate profile.
